# EUROPEAN PATENT APPLICATION

(11) **EP 4 431 585 A1**
(43) Date of publication of application: **18.09.2024**
(21) Application number: 23218920.9
(22) Date of filing: 20.12.2023
(51) Int. Cl.: C10L 3/08, C25B 1/04, F03D 9/19, H02J 3/38

(54) **PROCESS, SYSTEM AND CONTROL EQUIPMENT FOR THE SIMULTANEOUS USE OF ELECTRICITY PRODUCED BY PV SOLAR PANELS AND WIND POWER PLANTS FOR THE PRODUCTION OF SYNTHETIC NATURAL GAS**

(30) Priority: 21.12.2022 HU 2200498
(71) Applicant: Coopinter Kft., 1135 Budapest (HU)
(72) Inventor: Ottó, Hujber, 1162 Budapest (HU)
(74) Representative: Jámbor, Eszter

(57) **Abstract**

The subject of the invention is a method and system for the simultaneous use of electricity produced by PV solar panels and wind power plants for the production of synthetic natural gas. During the process the energy source is energy produced by household-size small power plants (mini pp), small combined heat and power plants (CHPs), solar power plants and wind power plants, as well as "deep valley" we use nuclear energy and the negative balancing energy of the electricity network. We connect the energy sources via the electricity network to at least one water digester, which is thus operated with electricity obtained from the energy sources, the hydrogen produced by the water digester is fed into a methanizer, carbon dioxide produced by natural gas consumption equipment is supplied to the hydrogen in the methanizer, from the hydrogen and methane is produced from carbon dioxides with the help of the methanizer, and the methane produced in this way is used to operate the natural gas consuming equipment. The method caracterized by the fact that the amount of hydrogen to be produced by the water electrolyser (10) is determined in the amount sufficient to produce the methane required to operate the natural gas consuming equipment (12), the water electrolyser (10) adjusted to the performance of the natural gas consuming equipment (12).

The subject of the invention is also a control and regulation device that ensures the coordinated operation of the above system, which includes a central control and regulation unit for microgrid purposes.

## Description

The subject of the invention is a method and system for the simultaneous use of electricity produced by PV solar panels and wind power plants for the production of synthetic natural gas. The subject of the invention is also a control and regulation device that ensures the coordinated operation of the above system, which includes a central control and regulation unit for microgrid purposes.

The traditional use of weather-dependent renewable energy sources, solar and wind energy, as part of the energy mix is well known.

The Power to Gas (P2G) seasonal energy storage technology is also known, which enables the conversion of the excess electricity produced into hydrogen in a water electrolyser equipment, and then the production of methane from this hydrogen and carbon dioxide in a methanation equipment (methanizer), which can be stored seasonally in the natural gas network, and then, in late autumn and winter, when there is little solar energy, it can be converted back into electricity.

The main obstacle to the spread of weather-dependent renewable energies is the limited possibility of their inclusion in the electricity grid, the technical reason of which is primarily that the time, quantity and duration of the production of weather-dependent renewable energies cannot be planned with sufficient accuracy.

This problem can be eliminated by installing high-capacity energy storage equipment (chemical batteries, pumped energy storage, compressed air energy storage, etc.), which requires a significant investment cost.

At the same time, there is still a limit to the full utilization of renewable energies as "free energy", since the available amount of wind and solar energy is several times the amount of energy that can be used as part of the energy mix in the electricity network.

This problem can be helped by the approach of looking at weather-dependent energies and P2G technology, not as a seasonal storage method of electricity, but as a source of synthetic natural gas, which enables decarbonization and a significant reduction of natural gas extraction and natural gas imports.

This approach enables the unlimited use of solar and wind energy, regardless of the current regulatory features of the given electricity network or its energy storage capabilities.

Several inventions deal with the utilization of weather-dependent renewable energies as electricity. For example, a system for producing gas that can be fed into a natural gas network from electrical energy is described in Chinese document No. CN212102723U. The system is a P2G type system, it is not integrated with existing gas engine power plants, it does not provide a solution for the use of oxygen produced during the production of hydrogen.

Document number CN112329259A applies to a microgrid system that can communicate with the regional energy service and uses renewable energy as supplementary energy. The solution that can be found in the document is suitable for harmonizing the energy consumption of households, it does not contain information about the large-scale storage of electricity.

Hungarian patent application No. P2100321 describes a gas engine based P2G system that generates pure carbon dioxide by the gas engines that are part of the system, using oxygen produced as a byproduct of water electrolyser equipment, replacing their combustion air with this oxygen, diluting it with carbon dioxide. However, the purpose of this P2G system is only the seasonal storage of electricity, in addition to the simultaneous regulation of the electricity network. This solution does not match the performance of the gas engine that generates carbon dioxide with the performance of the water electrolyser equipment, so the generated methane is forced to be delivered to the natural gas network instead of being used by the gas engine itself.

None of the solutions known to us provide guidance for the utilization of weather-dependent renewable energies independently of the operation of electricity grid, at the same time as their production, which aims to partially replace natural gas extraction and/or natural gas imports. None of the inventions makes it possible to collect the unused part of residential electricity produced by household-size small power plants (mini pp) - PV solar panels and wind turbines - and to use the collected electricity in a coordinated manner for the production of synthetic natural gas. None of the known solutions uses the extension of the operation of the water electrolyser, which is mostly supported by battery energy storage, in such a way as to integrate it with combined heat and power generating units (CHP) supplemented with thermal energy storage (TES), whose operation is controlled in coordination with the operation of the water electrolyser and solar/wind power plants.

The purpose of our invention is to integrate the electricity from wind power plants and solar panels from household-size small power plants (mini pp) into a single system and use it to the fullest for the production of methane (synthetic natural gas) in such a way that the storage and use of the produced synthetic natural gas is more efficient than at present. Our goal is to promote the utilization of solar and wind energy on a social scale.

We realized that if weather-dependent renewable energy is not treated as part of the "energy mix", but as a source of synthetic natural gas (as a factor of reducing natural gas extraction and natural gas import), then this will remove all known obstacles to the utilization of weather-dependent renewable energies. This approach eliminates the current time and quantity limitations of solar and wind energy utilization, related to electricity grid utilization. The utilization of weather-dependent renewable energies for the production of synthetic natural gas makes it possible to create the "critical mass" necessary for the spread of P2G technology. We call critical mass the business volume that brings with it a radical reduction in the price of the main equipment of P2G technology, the price of water electrolysers and methanizers. This price reduction will later enable the wider use of P2G technology for seasonal storage of electricity.

The unlimited utilization of weather-dependent renewable energies for the production of synthetic natural gas requires the expedient integration of the existing technological elements (solar panels, wind power plants, CHPs, water electrolyser, methanizer, natural gas consuming equipment and the electrical network that transmits the current), as well as the creation of the automatic control system that enables it. The present invention aims to provide a solution for this.

Our invention is therefore, on the one hand, a method for the use of electricity produced by solar panels and wind turbines at the same time as their production, for the production of synthetic natural gas. During the process, we use energy produced by household-sized small power plants (mini pp), combined heat and power plants (CHPs), solar power plants and wind power plants, as well as "deep valley" nuclear energy and negative balancing energy from the electricity network. The energy sources are connected via the electricity network to at least one water electrolyser, which is thus operated with the electricity obtained from the energy sources. The hydrogen produced by the water electrolyser is fed into a methanizer, carbon dioxide produced by the natural gas consuming equipment is added to the hydrogen in the methanizer, methane is produced from the hydrogen and carbon dioxide with the help of the methanizer, and the methane produced in this way is used to operate the natural gas consuming equipment. The characteristic of the procedure is that the amount of hydrogen to be produced by water electrolyser is determined in the amount necessary for the production of methane necessary for the operation of the natural gas consuming equipment, matching the performance of the water splitting to the performance of the natural gas consuming equipment.

The advantageous steps of the procedure are described in claims 2-4.

Our invention is also a system for the implementation of the process, which uses the energy produced by household-sized small power plants, combined heat and power plants (CHPs), solar power plants and wind power plants, as well as "deep valley" nuclear energy and the negative balancing energy of the electricity network. The energy sources are connected to at least one water electrolyser via the electricity network. The characteristic of the system is that the water electrolyser's oxygen outlet is connected to the air inlet of a natural gas consuming equipment, and the hydrogen outlet is connected to the hydrogen inlet of a methanizer. The carbon dioxide inlet of the methanizer is connected to the flue gas outlet of the natural gas consuming equipment, and the methane outlet of the methanizer is connected to the natural gas inlet of the natural gas consuming equipment.

Advantageous implementations of the system according to the invention are described in claims 6-8.

The subject of our invention is also the control and regulation equipment that ensures the coordinated operation of the above system, which equipment includes a microgrid' central control and regulation unit. The characteristic of the equipment is that the CHP control unit, the P2G control unit, and the units controlling the use of periodically occurring excess energy in the electricity network are connected to the output of the microgrid central control and regulation unit. The central control and regulation unit has a receiver unit for receiving the signals from the smart meters connected to the energy sources, as well as the signals from the electrical grid controller. The P2G control unit has a control connection with the water electrolyser and the methanizer, and has a receiver unit for receiving feedback from the water electrolyser, the methanizer, and the natural gas consuming equipment. The methanizer has a signal transmission connection with the natural gas consuming equipment.

If the system also includes an electricity storage, then an electricity storage control unit is also connected to the output of the microgrid central control and regulation unit.

One of the important elements of the solution we have developed is to match the performance of the electric water electrolyser with the performance of the natural gas consuming equipment that generates carbon dioxide. This means that we have to produce in the methanizer an amount of methane in m³/h corresponding to the natural gas demand of the natural gas consuming equipment in m³/h. The amount of methane produced in the methanizer is the same as the amount of carbon dioxide supplied to the methanizer. When sizing the water electrolyser, we must also take into account the energy efficiency of the methanizer and the water separator. The technology is controlled depending on the performance of the gas engine (gas turbine, gas boiler). The natural gas consuming equipment can be, for example, a gas engine or a gas turbine or a gas boiler. In this way, the appropriate use of the methane (synthetic natural gas) produced in the methanizer can be realized by not feeding it into the natural gas network, but after its continuous certified measurement and documentation, it is used by the natural gas consuming equipment itself. This saves energy and network usage. In this way, we can save the compression energy required for storage in the natural gas network and the transportation capacity of the natural gas network, as well as storage and retrieval transportation losses.

Another essential element of the solution is that, in addition to the electricity produced by solar and wind power plants, the electricity produced by residential solar panels, small windmills and residential micro-CHPs (collectively mini pp) as well as by district heating CHPs is not used at the time of their production, also can be used. Our solution also utilizes the unused part of these electrical energies, by using it in regional water electrolyser units as centralized dedicated consumers of surplus electricity, and by methanizing the hydrogen produced in this way. The owners of the given electricity can receive a corresponding amount of natural gas they are entitled to or its equivalent, in the schedule and time they require.

Another important element of the solution is that the operation of CHPs for heating purposes that are part of the system (see: apartments, pensions, condominiums, restaurants, hospitals, swimming pools, wellness hotels, etc.) by using thermal energy storage equipment (TES), with remote access, in such a way we regulate that the electricity they produce is generated when weather-dependent renewable energy is not available or is not available in sufficient quantities. In this way, we can prolong and make the operation of the water electrolyser more balanced. Optionally, the daily operating time of the electric water electrolyser can be further increased by an electricity storage (chemical battery, pumped energy storage, etc.) supplementing the system, as well as the inclusion of "deep valley" nuclear energy and negative regulating energy. The longer daily operating time accelerates the financial return of the water electrolyser and the methanizer, and the balanced, close-to-nominal power mode provides better energy efficiency for the water decomposer and the methanizer.

An important element of the solution is to ensure mutually beneficial cooperation with the electricity network, as the system that transmits the produced renewable electricity. The most important of these is the provision of negative and positive balancing energies for the electricity network, in the required time and quantity.

Control technology is an essential component of the solution. The appropriate and energy-efficient operation of the solution according to the invention is ensured by electrical regulation. Automatic regulation with the help of electricity and gas smart meters and a virtual micro-grid software provides:
- Matching the performance of the water electrolyser, which generates oxygen as a by-product, to the operation and performance of the natural gas consuming equipment that generates carbon dioxide, without changing their normal operation.
- Collecting the electricity produced by household-size solar panels, wind turbines and CHPs (mini pp) and other larger CHP units, as well as solar and wind power plants, and coordinating their combined performance with the electric water electrolyser plant.
- Personalized registration of electricity produced by residential solar and wind energy, as well as residential micro-CHPs, that were not consumed at the time of production and transferred to the water electrolyser, and the registration and accounting of the compensation for these electrical energies with natural gas.
- Controlling the operation time and performance of the CHP units together with the operation of the associated thermal energy storage (TES), in accordance with the energy demand of the water electrolyser, so that the heat supplying CHPs operate when the sun is no longer shining and/or the wind is not blowing (in sunny and/or windy weather, TES is the heat provider).
- Coordinating the operation of mini pp and solar and wind power plants with the energy storage plant, which is an optional part of the system, as well as the coordination of the energy storage plant with the water splitting plant and the demand of the electricity network (see: "deep valley" nuclear energy, circulation of negative and positive balancing energies).
- Automatic cooperation with the Electricity System Company (TSO) and/or the competent power suppliers, the use of the electrical network described above, as well as the negative and positive balancing energies, etc. regarding its traffic and service.

I will explain my invention in more detail below based on drawings, where:
Figure 1 shows the structure of the system according to the invention, and
Figure 2 shows the structure of the automatic control and regulation that ensures the coordinated operation of the system according to the invention.

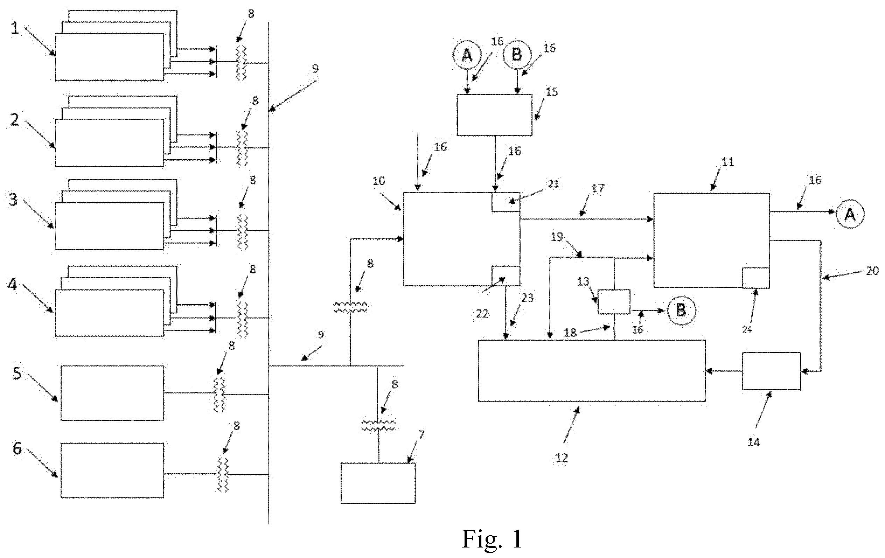

Figure 1 shows the main elements of the invention: household-size small power plants (mini pp) 1, CHPs producing combined heat and electricity 2, solar power plants 3, wind power plants 4, "deep valley" nuclear energy 5 and the electrical network's negative compensating energy 6, all the energy sources of synthetic natural gas.

These energy sources are connected via the electrical network 9 to at least one water electrolyser 10 and, where appropriate, to at least one electricity storage 7 through the interposition of matching transformers 8. The 7 electricity storage units are connected to the water electrolyser 10, and their task is to extend the daily operation of the water electrolyser 10 and to balance it close to its nominal performance by distributing the energy from the energy sources in a timely manner.

In the illustrated embodiment, water is introduced into the water electrolyser 10 through a water purifier 15. On the one hand, the water purifier 15 is connected to the water supply network via an "A" inlet, and on the other hand, to a condenser 13 connected to the flue gas outlet 18 of the natural gas consuming equipment 12 via a "B" inlet. The oxygen outlet of the water electrolyser 10 is connected - preferably via an oxygen buffer tank 22 - to the air inlet of a natural gas consuming equipment 12, such as a gas engine or gas turbine or gas boiler, and the water electrolyser's hydrogen outlet is connected - preferably via a hydrogen buffer tank 21 - to the hydrogen inlet of a methanizer 11. The carbon dioxide inlet of the methanizer 11 is connected to the flue gas outlet of the natural gas consuming equipment 12, and the methane outlet of the methanizer 11 is connected to the natural gas inlet of the natural gas consuming equipment 12. The methanizer 11 can be a traditional Sabatier type of chemical- or microorganism-based biological methanizer.

During the operation of the system, the methanizer 11 produces methane 20 (synthetic natural gas) from the hydrogen produced by the water electrolyser 10 and the carbon dioxide produced by the natural gas consuming equipment 12, which is consumed by the natural gas consuming equipment 12. For a specialist, it is easy to see that the amount of hydrogen measured in m³ must be four times the amount of carbon dioxide measured in m³. The amount of methane 20 produced is measured and documented before it is delivered to the natural gas consuming equipment using a measuring device 14.

The oxygen that replaces the combustion air of the natural gas consuming equipment is mixed with carbon dioxide before entering the natural gas consuming equipment (the mixing unit is conventional, so it is not shown in figure 1).

The performance of the water electrolyser 10 and the methanizer 11 is matched to the performance of the natural gas consuming equipment, so that exactly as much methane is produced as is necessary for the operation of the natural gas consuming equipment. (The basic principles of matching the performance of the water splitting, methanizer 11, and natural gas consuming equipment 12 will be explained later.)

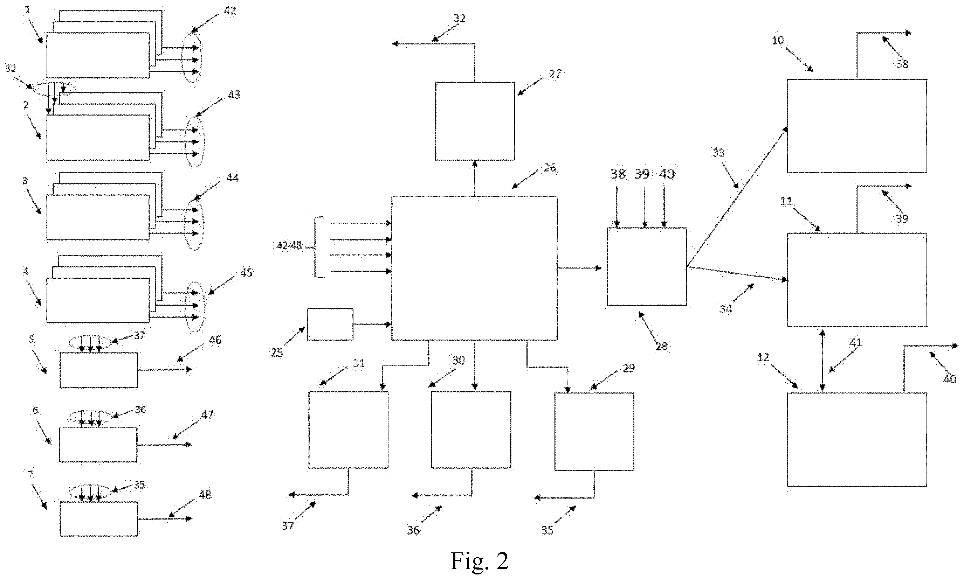

Figure 2 shows a preferred embodiment of the control and regulation equipment that ensures the coordinated operation of the system, which includes micro-grid central control and regulation unit 26. The output of the microgrid central control and regulation unit 26 is connected to the control unit of CHPs 27, the P2G control unit 28, the control unit 29 of the electricity storage 7 and the units controlling the use of excess energy occurring periodically in the electricity network 9. The latter can be a control unit for the use of negative balancing energy 30 and a control unit for the use of deep valley nuclear energy 31. The central control and regulation unit 26 has a receiver unit for receiving the signals of the smart meters 42, 43, 44, 45, 46, 47, 48 connected to the energy sources - not shown in the figure - and the signals from the electricity network company (TSO) 25. The P2G control unit 28 is in a control connection 33, 34 with the water electrolyser 10 and the methanizer 11, and has a receiver unit for receiving feedback 38, 39, 40 from the water electrolyser 10, the methanizer 11, and the natural gas consuming equipment 12. The methanizer 11 has signal transmission connections 41 with the natural gas consuming equipment 12, thereby ensuring the co-operation of the methanizer 11 and the natural gas consuming equipment 12.

Matching the performance of the water electrolyser 10, the methanizer 11 and the natural gas consuming equipment 12 can be a model example of the circular economy and is also of decisive importance in terms of decarbonization and the fullest possible utilization of weather-dependent renewable energies. Matching the performance of the equipment can also mean that the natural gas consuming equipment 12 can operate with zero or close to zero carbon dioxide emissions, since the carbon dioxide it emits, with the help of the hydrogen 17 produced by the water electrolyser 10, produces methane in the methanizer 11.

It is important that the performance of the natural gas consuming equipment 12, which is determined by the amount of methane (natural gas) it consumes, should be such that it corresponds to the amount of methane 20 (synthetic natural gas) produced in the methanizer 11. This is called matching the performances of the water electrolyser 10 and natural gas consuming equipment 12, matching their performances to each other. For this, the performance of the water electrolyser 10 is chosen so that it produces four times as many cubic meters (m³) of hydrogen 17 as the amount of carbon dioxide 19 produced from methane 20 in the natural gas consuming equipment 12.

In addition to hydrogen 17, the water electrolyser 10 also produces oxygen 23 as a by-product in an amount m³ that is half the amount of hydrogen 17 produced. It follows from this that the performance of the water electrolyser must be approximately twice the gross performance of the natural gas consuming equipment, if the product of the efficiencies of the water electrolyser and the methanizer is around 50%. The natural gas consuming equipment 12 uses this oxygen 23 to burn the methane 20 needed for its performance, instead of the usual air, in such a way that carbon dioxide 19 is mixed with the oxygen 23 from the water electrolyser 10, which replaces the inert nitrogen in the air. In this way, the exhaust of the natural gas consuming equipment emits only pure carbon dioxide, which no longer needs to be cleaned. Carbon dioxide, which dilutes oxygen, must be fed into the system separately when starting the system (not marked in figure 1). The proportion of oxygen in the air is about 21%. Our experiments have shown that the proportion of oxygen in the oxygen-carbon dioxide mixture is ideally higher, between 25% and 39%, depending on the performance and type of the natural gas consuming equipment. The exact values must be determined individually and experimentally for each type of natural gas-consuming equipment.

The above-described new type of P2G system based on natural gas consumption equipment and preferably contains small oxygen and hydrogen buffer tanks 22 and 21, as well as a carbon dioxide buffer tank, not shown in the figure.

When we talk about natural gas-consuming equipment 12, we also mean all energy-generating equipment that uses natural gas, especially gas engines, gas turbines and gas boilers. The above performance matching principles apply to them as well.

In the figures, we marked first the 1 household-size solar and wind power plants (mini pp). When we aim for the utilization of solar and wind energy on a social scale, it is not possible without the utilization of the roofs of residential buildings. According to Budapest's solar panel map, the total capacity of mini-size solar panels that can be installed on rooftops is 5,000 MWp. The same applies to Hungary, it's solar roof-potential is about 20,000 MWp. This can be supplemented by mini wind generators, whose potential is also significant. All this is important because these mini pp do not occupy arable land or cropland. Due to the state of the electricity network and its energy storage/control capabilities, new mini pp are currently not allowed into the network, they can only operate in an island-mode. The island operation is not economical for households, as they can only use a small part of the electricity produced, which is why the installation of mini pp has stopped lately. The solution according to the invention helps with this problem, according to which the mini pp 1 are connected to the electrical network 9 via an adapter transformer 8. Based on the signals of the smart meters 42, the part of the electricity produced by mini pp that is not used by their owners is collected with the help of the microgrid central control and regulation units 26. The electricity integrated in this way is released by the P2G control unit 28 at the same time to the water electrolyser 10, from which the water electrolyser 10 produces hydrogen 17. Of the hydrogens 17, methanizers 11, together with carbon-dioxides 19, produce methane 20, which is consumed instead of natural gas. So, the corresponding natural gas left in the natural gas network for seasonal storage and later use in the heating season.

Mini pp owners can receive the natural gas they are entitled to, or its equivalent value, during the heating season, or at any other time if required.

If the performance of the water electrolyser is matched to the performance of the 12 natural gas consuming equipment, then the storage of the ethane 20 is only an "exchange transaction", i.e. the methane 20 produced is consumed by the natural gas consuming equipment 12 with the interposition of an official certified measuring device. So, the not consumed natural gas remains in the natural gas storage (network) and is registered by the microgrid central control and regulation units 26.

In order to use weather-dependent renewable energies as fully as possible, and to extend the operating time of water electrolyser 10 and methanizers 11, in addition to 1 mini pp, 2 CHPs, 3 solar power plants and 4 wind power plants, the microgrid central control and regulation units 26, with the help of the "deep valley" nuclear energy control unit 31 and the negative balancing energy control unit 36, as well as the energy storage control unit 35, it ensures the use of the 5 "deep valley" nuclear energy and the 6 negative balancing energy that is occasionally necessary for the electricity network.

The operating time of the water electrolyser 10 and the methanizer 11 is further extended by supplementing the existing 2 CHPs with thermal energy storage units (TES) or, in the case of installing new 2 CHPs, by installing them together with TES, as well as by using the CHP' control unit 27 in such a way control and regulation so that the 2 CHPs operate when the sun is not shining and/or the wind is not blowing. In sunny and/or windy weather, heat is provided by heat storage units. Based on the signals of the smart meters 43, the electricity produced by the 2 CHPs and not used by their owners is also used by the water electrolyser 10.

The proposed new type of P2G system methane generator based on natural gas consuming equipment 12 with a performance matched to the performance of the water electrolyser 10, among other things, with the extensive integration of 1 mini pp and the use of the negative balancing energy of the electricity network, can enable the utilization of solar and wind energy on a social scale at the power providers through, with the help of smart virtual micro-grids created as described above.

This solution eliminates the time and quantity limitations of the electricity grid for the utilization of weather-dependent renewable energies.

## Claims

1. Method for using electricity produced by solar panels and wind power plants at the same time as their production for the production of synthetic natural gas, during which the energy source is energy produced by household-size small power plants (mini pp), small combined heat and power plants (CHPs), solar power plants and wind power plants, as well as "deep valley" we use nuclear energy and the negative balancing energy of the electricity network, we connect the energy sources via the electricity network to at least one water digester, which is thus operated with electricity obtained from the energy sources, the hydrogen produced by the water digester is fed into a methanizer, carbon dioxide produced by natural gas consumption equipment is supplied to the hydrogen in the methanizer, from the hydrogen and methane is produced from carbon dioxides with the help of the methanizer, and the methane produced in this way is used to operate the natural gas consuming equipment, **characterized by** the fact that the amount of hydrogen to be produced by the water electrolyser (10) is determined in the amount sufficient to produce the methane required to operate the natural gas consuming equipment (12), the water electrolyser (10) adjusted to the performance of the natural gas consuming equipment (12).

2. The method according to claim 1, **characterized by** the fact that the small CHP power plants that produce combined heat and electricity are supplemented with thermal energy storage units (TES) and that the operation of the CHPs, with remote access, meets the electricity needs of the water splitting (10) properly controlled.

3. The method according to claim 1 or 2, **characterized in that** the oxygen produced by the water decomposer (10) mixed with carbon dioxide is used to operate the natural gas consuming device (12).

4. The method according to any one of the claims 1-3, **characterized in that,** in order to make the operation of the water electrolyser (10) more balanced, the electricity storage (7) is connected to the water separator (10) and connected to the energy sources (1, 2, 3, 4, 5, 6) via the electrical network.

5. System implementing the process according to any one of claims 1-4, which system uses energy produced by household-size small power plants, combined heat and power plants (CHPs), solar power plants and wind power plants, as well as "deep valley" nuclear energy and the negative balancing energy of the electricity network, the energy sources through the electricity network are connected to at least one water decomposer **characterized by** the fact that the oxygen outlet of the water electrolyser (10) is connected to the air inlet of the natural gas consuming device (12), and the hydrogen outlet is connected to the hydrogen inlet of a methanizer (11), the carbon dioxide inlet of the methanizer (11) is connected to the flue gas outlet of the natural gas consumer equipment (12), and the methane outlet of methanizer (11) is connected to the natural gas inlet of the natural gas consumer equipment (12).

6. The system according to claim 5, **characterized in that** the oxygen outlet of the water electrolyser (10) is connected to the air inlet of the natural gas consuming equipment (12) via an oxygen buffer tank (22), and hydrogen outlet is connected to the methanizer (11) via a hydrogen buffer tank (21) for hydrogen input.

7. The system according to claim 5 or 6, **characterized by** the fact that the water electrolyser (10) is connected to the energy sources (1, 2, 3, 4, 5, 6) via the electricity network an electrical energy storage (7) is connected.

8. The system according to any one of the claims 5-7, **characterized in that** the combined heat and power plants (CHPs) producing thermal energy and electricity are supplemented with thermal energy storage units (TES).

9. Control and regulation equipment to ensure the coordinated operation of the systems according to any one of the 5-8 claims, which includes a microgrid central control and regulation unit, **characterized in that** the output of the microgrid central control and regulation unit (26) is CHPs control unit (27), P2G control unit (28), and units (30, 31) controlling the use of excess energy occurring periodically in the electricity network are connected, and the central control and regulation unit (26) has a receiver for the signals of the smart meters (42, 43, 44, 45, 46, 47, 48) connected to the energy sources, and for receiving the signals of the electrical grid company (TSO) (25), the P2G control unit (28) is in control connection (33, 34) with the water electrolyser (10) and the methanizer (11) and has a receiver from the water electrolyser (10) , to receive feedback (38, 39, 40) from the methanizer (11) and the natural gas consuming equipment (12), and the methanizer (11) is in a signal transmission connection (41) with the natural gas consuming equipment (12).

10. The control and regulation device according to claim 9, **characterized in that** the control unit (29) of the electrical energy storage (7) is also connected to the output of the microgrid central control and regulation unit (26).
